Europäisches Patentamt

European Patent Office

Office européen des brevets

(19)

(11) Veröffentlichungsnummer: **0 101 892**
**B1**

(12) # EUROPÄISCHE PATENTSCHRIFT

(45) Veröffentlichungstag der Patentschrift:
24.09.86

(21) Anmeldenummer: 83107139.4

(22) Anmeldetag: 21.07.83

(51) Int. Cl.⁴: **A 22 C  13/00**

(54) **Leichtschälbare Wursthülle mit einer Klebenaht, Verfahren zu ihrer Herstellung und ihre Verwendung.**

(30) Priorität: 30.07.82 DE 3228514

(43) Veröffentlichungstag der Anmeldung:
07.03.84 Patentblatt 84/10

(45) Bekanntmachung des Hinweises auf die Patenterteilung:
24.09.86 Patentblatt 86/39

(84) Benannte Vertragsstaaten:
AT BE CH DE FR GB IT LI LU NL SE

(56) Entgegenhaltungen:
EP-A-0 006 551
EP-A-0 054 162
FR-A-2 141 324
FR-A-2 163 623
FR-A-2 443 979

(73) Patentinhaber: HOECHST AKTIENGESELLSCHAFT,
Postfach 80 03 20, D-6230 Frankfurt am Main 80
(DE)

(72) Erfinder: Hutschenreuter, Elfriede, Haardtstrasse
116, D-6208 Bad- Schwalbach (DE)
Erfinder: Andrä, Klaus, Dr., Konrad- Adenauer-
Strasse 10, D-6501 Zornheim (DE)
Erfinder: Heyse, Klaus, Kelkheimer- Strasse 10,
D-6232 Bad- Soden (DE)

EP 0 101 892 B1

2

**Beschreibung**

Die Erfindung bezieht sich auf eine Wursthülle von der im Oberbegriff des Anspruchs 1 genannten Art, auf ein Verfahren zu ihrer Herstellung und ihre Verwendung.

Wursthüllen mit einer Klebenaht werden durch längsaxiales Falten einer Bahn zu einem Schlauch und Verkleben der sich überlappenden, längsaxial sich erstreckenden Randzonen hergestellt (EP-A-0 037 543 und EP-A-0 054 162).

Nach der US-A-2,607,696 wird eine Randzone der Bahn aus regenerierter Cellulose mit einer sauren, wäßrigen Lösung eines teilweise polymerisierten, hitzehärtbaren Harnstoff-Formaldehyd- oder Melamin-Formaldehyd-Harzes versehen und anschließend die andere Randzone der Bahn unter Schlauchformung mit der Harzschicht zusammengepreßt. Danach werden die sich überlappenden Randzonen bei etwa 180 bis 220° C unter Einwirkung von Druck, wobei das Harz hitzegehärtet wird, miteinander verbunden. Diese Schlauchhülle kann nach Angabe dieser Druckschrift auch als Wursthülle zur Herstellung hautloser Würstchen verwendet werden, wobei die Schlauchhülle nach dem Kochvorgang von der Wurst abgeschält wird.

Dieses bekannte, etwa 30 Jahre alte Verfahren wird kaum mehr ausgeübt. Insbesondere ist die erhaltene Überlappungsnaht nicht ausreichend fest. Wegen der relativ geringen Reißfestigkeit der Naht besteht z. B. die erhöhte Gefahr, daß daraus hergestellte Würste aufplatzen. Ferner kann die bekannte Schlauchhülle nur relativ umständlich hergestellt werden. Insbesondere führen die hohen Temperaturen während der Verklebung zu einem unerwünschten Wasserverlust sowie einer bleibenden Verschlechterung der physikalischen Eigenschaften des Bahnmaterials, so daß die erhaltene Schlauchhülle z. B. für das anschließende Raffen zur Herstellung von Raupen nicht geeignet ist. Andererseits ist aber nach dieser Druckschrift das Erhitzen auf Temperaturen von über 180°C nach dem Klebstoffantrag erforderlich, um überhaupt eine Verbindung zwischen den sich überlappenden Randzonen der Bahn zu erreichen. Ferner ist die Schälbarkeit dieser Wursthüllen unbefriedigend, eine Innenbeschichtung zur Verbesserung der Schälbarkeit ist nach dieser Druckschrift nicht vorgesehen.

Wegen dieser Nachteile werden künstliche Wursthüllen inzwischen überwiegend aus nahtlosem Material hergestellt, obwohl bei diesen nahtlosen Schlauchhüllen auch einige Nachteile akzeptiert werden müssen; insbesondere ist dieses Verfahren sehr kostenintensiv. Nachteiligerweise treten beispielsweise bei der Herstellung nahtloser Schläuche aus Cellulose an den Kanten des flachgelegten Schlauchs während der Regenerierung längsaxial im Kantenbereich sich erstreckende Schwächungszonen, sogenannte Spinnkanten, auf. Ferner zeigen auch die bei den nahtlosen Schläuchen üblichen Streckverfahren Nachteile.

Die für die Verwendung des nahtlosen Schlauches als leicht schälbare Wursthülle erforderliche Innenbeschichtung muß als Lösung oder Dispersion in das Innere des nahtlosen Schlauches eingebracht werden, was verfahrenstechnisch aufwendig ist und mit Störungen verbunden sein kann. Die Lösung oder Dispersion muß z.B. in einer zeitaufwendigen eigenen Prozeßstufe in den Schlauch eingebracht werden, wobei der Schlauch aufgeschnitten werden muß. Ferner wurde für Schläuche mit einer Klebenaht bisher keine geeignete Innenbeschichtung zur Verbesserung der Schälbarkeit vorgeschlagen, welche insbesondere keinen negativen Einfluß auf den Klebstoff in der Nahtzone ausübt. Es ist zwar bereits bekannt (US-A-3,898,348), Celluloseether zusammen mit einem Öl zur Innenbeschichtung von Schläuchen zu verwenden, wobei allerdings eine homogene wäßrige Emulsion aufgebracht und der Anteil der Öl-Komponente im Vergleich zur Menge an Celluloseether und ihre aufgebrachte Menge gering sein muß. Dieser Überzug ist für geklebte Schläuche nicht geeignet, da er die Festigkeit der Klebenaht zu stark herabsetzt. Der in der EP-A-0 006 551 beschriebene innere Überzug zur Verbesserung der Schälbarkeit von Schlauchhüllen besteht überwiegend aus einer Ölkomponente und enthält zusätzlich chemisch modifizierte Stärkederivate, teilverseiften Polyvinylalkohol und/oder mikrokristalline Cellulose. Die Überzugsflüssigkeit ist überwiegend wäßrig, denn sie enthält nur bis zu 20 Gew.-% der Ölkomponente. Die Probleme der Nahtbildung werden allerdings in dieser Druckschrift nicht angesprochen.

Ausgehend von dem aufgezeigten Stand der Technik ist es deshalb Aufgabe der Erfindung, eine leicht schälbare Wursthülle aus Cellulose oder faserverstärkter Cellulose vorzuschlagen, die alle die genannten Nachteile der bekannten Schlauchhüllen nicht aufweist. Die Schlauchhülle muß im Bereich ihrer Verklebungsnaht relativ hohen mechanischen und thermischen Belastungen, z. B. Dehnungsbelastungen und der Einwirkung von heißem Wasser, standhalten und den Geschmack und das Aussehen des Lebensmittels nicht beeinträchtigen. Sie soll auch mit üblichen Raffvorrichtungen zu Raupen gerafft werden können.

Eine besonders wesentliche Aufgabe besteht darin, eine Hülle zu schaffen, die im Bereich ihrer Verklebungsnaht ausreichend gas- und rauchdurchlässig ist, bei gleichzeitig großer Reißfestigkeit, und die eine ausgezeichnete Schälbarkeit aufweist. Eine solche Hülle ist für Würste vorgesehen, die geräuchert werden sollen, z. B. für spezielle Brühwürste oder Dauerwurstwaren, und deren Hülle auch abschälbar sein muß.

Eine weitere wichtige Aufgabe der vorliegenden Erfindung besteht darin, eine Wursthülle mit einer Klebenaht aus gegebenenfalls faserverstärkter regenerierter Cellulose vorzuschlagen, deren zur Verbesserung der Schälbarkeit vorgesehene Innenbeschichtung die Festigkeit der Klebenaht nicht herabsetzt.

Eine weitere Aufgabe der Erfindung besteht darin, ein Verfahren aufzufinden, das eine Nahtbildung bei Raumtemperatur und kurzer Verweilzeit bis zum Trocknen des Klebstoffs ohne zusätzlichen Haftvermittler ermöglicht.

Eine Aufgabe der Erfindung besteht auch darin, eine gerade, im wesentlichen krümmungsfreie und faltenfreie Wursthülle mit einer Naht zu schaffen, die auch unter Einwirkung von Wasser und beim Schrumpfen ihre krümmungsfreie und faltenfreie Form auch im Nahtbereich beibehält, trotz der relativ großen Hüllendicke in diesem Bereich.

Schließlich ist es auch Aufgabe der Erfindung, eine Öffnungshilfe vorzusehen, die ein leichteres und hygienisches Entfernen der Hülle vom Inhalt gestattet, ohne daß Schwachstellen an der Wursthülle vorgesehen werden müssen.

Diese Aufgabe wird überraschenderweise gelöst mit der im Anspruch 1 genannten Wursthülle. Die Ansprüche 2 bis 7 geben weitere Ausführungsformen der Wursthülle an. Die Aufgabe wird ferner gelöst durch ein Verfahren zur Herstellung der Wursthülle mit den im Anspruch 8 genannten Merkmalen. Gegenstand der Erfindung ist außerdem die in den Ansprüchen 9 und 10 angegebene Verwendung.

Diese Hülle mit der speziellen Kombination aus Klebstoff und Beschichtung auf der inneren Oberfläche zeigt überraschenderweise den Vorteil, daß Klebstoff und Beschichtung einander nicht negativ beeinflussen, so daß sie sogar zeitlich unmittelbar aufeinanderfolgend auf das Trägermaterial aus Cellulose aufgebracht werden können. Die Hülle behält bei der Einwirkung von Wärme und Wasser, wie dies beispielsweise beim Brühen und anschließendem Abkühlen von Wursthüllen geschieht, ihre gerade, krümmungsfreie Form bei. Dies ist besonders überraschend und nicht vorhersehbar, denn es ist an sich zu erwarten, daß die Hülle bei Einwirkung von Wärme und Wasser, aufgrund der verschiedenen Wandstärken im Nahtbereich einerseits und im übrigen Bereich andererseits und der daraus zu erwartenden unterschiedlichen Werte für die Festigkeit, für das Wasseraufnahme- und Wasserrückhaltevermögen, sich krümmt oder ungleichmäßig ausdehnt oder schrumpft und sogar zum Platzen neigt.

Die Bildung einer Schlauchhülle mit einer Naht oder mehreren längsaxial sich erstreckenden Nähten durch Verklebung der Randbereiche der längsaxial sich erstreckenden Randzonen ist an sich bekannt, wozu auf die eingangs zitierten Druckschriften verwiesen wird.

Entsprechend der vorliegenden Erfindung wird ein um seine Längsachse gebogener, blatt- oder bahnförmiger rechteckiger Folienzuschnitt oder eine entsprechend gebogene z.B. endlose Folienbahn aus Cellulose, ohne ein Verankerungsmittel für den Klebstoff zu verwenden, durch Überlappung und Verklebung der längsaxial sich erstreckenden Randbereiche mit einer Klebstoff enthaltenden Lösung oder Dispersion in eine Schlauchhülle mit einer längsaxial sich erstreckenden Verbindungsnaht übergeführt und die Schlauchhülle noch vor dem Aufwickeln mit einem die Schälbarkeit verbessernden Überzug auf der Innenseite versehen.

Der Einfachheit halber wird im folgenden anstelle von "blatt- oder bahnförmigen Zuschnitten" und "endlosen Bahnen" nur von Bahnen gesprochen.

Die Klebstoff enthaltende Schicht im Überlappungsbereich wird in Form einer Lösung oder Dispersion direkt auf die Oberfläche der Rahn entlang ihrer Randzonen aufgebracht Es ist auch möglich, die Randzonen in der Weise miteinander zu verbinden, daß die Ränder bündig, d. h. mit den Kanten zumindest im wesentlichen aneinanderstoßend einander genähert werden und dann mit einem Band, Film- bzw. Folienstreifen, im folgenden als Folienstreifen bezeichnet, der beide Randzonen überdeckt, miteinander verbunden werden. Der Folienstreifen befindet sich dann auf der Außenseite oder Innenseite der Schlauchhülle, oder es werden parallel zueinander verlaufende Folienstreifen verwendet, von denen sich dann einer auf der Innenseite und einer auf der Außenseite der Schlauchhülle befindet. Ein oder mehrere Folienstreifen können auch verwendet werden, wenn die Randzonen sich überlappen. Die Klebstoffschicht wird in Form einer Lösung oder Dispersion unmittelbar vor der Herstellung der Verbindungsnaht auf die Randzonen der Bahn, und/oder gegebenenfalls auf die Oberflächen des Folienstreifens aufgebracht, z.B. mit einer Düse oder einer Antragswalze.

Der Folienstreifen hat zweckmäßigerweise eine Breite von 5 bis 15 % des Schlauchumfangs und besteht vorzugsweise aus dem gleichen Material wie die Schlauchhülle, d. h. aus rauchdurchlässiger, gegebenenfalls faserverstärkter Cellulose, wobei dessen Festigkeitswerte in Längs- und Querrichtung im gleichen Bereich wie beim Schlauchmaterial liegen. Sofern jedoch auf die krümmungsfreie Form der Schlauchhülle kein besonderer Wert gelegt wird, ist es auch möglich, einen rauchdurchlässigen Folienstreifen aus einem anderen Material zu verwenden, wie es in der EP-A-0 037 543 beschrieben wird. Es ist jedoch wesentlich, daß der Folienstreifen aufgrund seiner Struktur oder chemischen Zusammensetzung fähig ist, den Räucherrauch durch die Verbindungsnaht der Schlauchhülle durchtreten zu lassen.

Der Folienstreifen aus gegebenenfalls faserverstärkter Cellulose läßt sich auch, wie in der EP-A-0 054 162 beschrieben, als Aufreißband für die mit Füllgut gefüllte Wursthülle, die vom Inhalt ohne großen Aufwand abgezogen werden soll, verwenden.

Die Formung der Bahn zu einem Schlauch erfolgt beispielsweise entweder auf einer genügend langen Wegstrecke, so daß keine Verzerrungen und Faltenbildung erfolgt (vgl. Fig. 6 und 8 der EP-A-0 037 543), oder durch Umlenkung über ein schulterartiges Formwerkzeug (vgl.Fig. 3,4 und 7 der EP-A-0 054 162). Wenn der Schlauch geformt ist, grenzen die beiden Seitenkanten der Bahn im wesentlichen abstandslos aneinander oder überlappen sich. Mittels am Schlauchumfang angreifender Transportelemente wird der Schlauch über die Oberfläche eines im Schlauchinneren angeordneten Stützkörpers bewegt. Der gegebenenfalls verwendete Folienstreifen wird vor dem Nahtschluß vorzugsweise mit seiner in Richtung zur inneren Oberfläche des Schlauches weisenden Klebstoffschicht so zwischen die Oberfläche des Stützkörpers und den aneinanderstoßenden Rändern der Bahn eingeführt, daß die durch die Ränder der Bahn gebildete Stoßnaht etwa die Mittellinie des Folienstreifens bildet, wobei der Folienstreifen beide Randzonen im wesentlichen gleich breit überdeckt. Die Verklebung kann durch Kontakt mit einer Walze erfolgen, wobei auf die Verklebungsstelle zusätzlich Druck ausgeübt werden kann, gegebenenfalls kann man auch geringfügig Wärme einwirken lassen, wobei die Verklebungsstelle möglichst unter 40°C gehalten wird. Von einer Druckanwendung und Wärmezufuhr wird jedoch gewöhnlich abgesehen, da sie zu einer unerwünschten Veränderung, insbesondere Versprödung und Austrocknung des Bahnmaterials führen kann. Überschüssige Klebstofflösung kann aus dem Nahtbereich beispielsweise durch eine Walze mit schwammartiger Oberfläche oder mit Abstreifern entfernt werden.

Gewöhnlich ist allerdings das Wasseraufnahmevermögen (Quellwert) des Bahnmaterials ausreichend, um überschüssiges wäßriges Lösungs- oder Dispersionsmittel aufzunehmen. Bahnbewegung und Verklebung können taktweise oder kontinuierlich erfolgen. Es ist besonders überraschend und nicht vorhersehbar, daß die erfindungsgemäße Kombination aus Klebstoff und Bahnmaterial zu einer schnellen Trocknung der Klebstoffschicht vorzugsweise bereits bei Raumtemperatur führt. Unter Raumtemperatur sind Temperaturen zwischen etwa 15 und 30°C zu verstehen. Dieser Effekt hat den weiteren Vorteil, daß die gebildeten Schlauchhüllen bereits nach 1 bis 3 Sekunden nach der Nahtbildung bereits aufgewickelt werden können, ohne daß die Naht verrutscht. Nach der Nahtbildung und noch vor dem Aufwickeln der Schlauchhülle erfolgt die Innenbeschichtung mit dem die Schälbarkeit verbessernden Mittel, ohne daß diese aus einer öligen Emulsion bestehende Präparation die Verklebung negativ beeinflußt. Nach einer Lagerzeit von etwa 1 bis 3 Tagen bei einer Temperatur bis zu 40°C, vorzugsweise bei Raumtemperatur, ist der Klebstoff vollständig ausgehärtet, und die Naht kann dann größeren Relastungen, wie sie z.B. bei der Wurstherstellung auftreten, ausgesetzt werden.

Als Basismaterial für die Herstellung der Schlauchhülle dienen Rahnen aus Cellulose, d. h. aus Zellglas, regenerierter Cellulose oder Cellulosehydrat, die gegebenenfalls mit einer Fasereinlage verstärkt sind, wie sie als Wursthüllenmaterial üblich sind (EP-A-0 037 543). Sofern die Cellulosebahn eine Faserverstärkung aufweist, erfolgt ihre Herstellung vorzugsweise nach dem in der EP-A-0 054 162 beschriebenen Verfahren.

Der nach der Erfindung vorgesehene Klebstoff ist ein kationisches Harz, das zunächst in wasserlöslicher Form in einer wäßrigen Lösung oder Dispersion, zweckmäßigerweise in einer Naßschichtdicke im Bereich von etwa 2 bis 20 µm, insbesondere 3 bis 10 µm, auf die miteinander zu verbindenden Randzonen der Cellulosebahn unmittelbar vor oder während der Schlauchformung aufgebracht wird. Wird ein Folienstreifen zur Verbindung der Randzonen der Cellulosebahn verwendet, so wird die Lösung oder Dispersion auf den Folienstreifen und/oder auf die Randzonen der Cellulosebahn aufgebracht. Der Klebstoffauftrag auf den Folienstreifen erfolgt beidseitig, wenn der Folienstreifen in der Überlappung zwischen den Randzonen der Cellulosebahn angeordnet wird.

Vorzugsweise wird der Klebstoff in 5 bis 20 gew.-%iger, insbesondere 10 bis 15 gew.-%iger wäßriger Lösung aufgebracht. Der Einfachheit halber wird im folgenden nur der Ausdruck "Klebstofflösung" gebraucht.

Die Klebstofflösung kann einen Farbstoff enthalten, wie z.B. einen Pigmentfarbstoff (®Novofil, Herst. Hoechst) sowie gegebenenfalls ein Polyol wie Glycerin und/oder ein Dispergiermittel für den Farbstoff. Die farblich gekennzeichnete Nahtzone dient beispielsweise zur Identifizierung des Kalibers der Schlauchhülle bei der Weiterverarbeitung.

In bevorzugter Ausführung erfolgt die Härtung der Harze im alkalischen Bereich, z. B. durch Zusatz von konzentrierter Ammoniaklösung, und bei Raumtemperatur.

Die Herstellung der als Klebstoff geeigneten kationischen Harze ist in der US-A-3,378,379 beschrieben. Die Klebstoffe sind Kondensationsprodukte von aliphatischen Polyaminen oder von Polyamiden, insbesondere von Polyamidpolyamin mit bifunktionellen Halohydrinen oder deren Derivaten wie z.B. Epichlorhydrin, wie sie beispielsweise auch in US-A-2,926,154 und US-A-2,573,956 oder in GB-A-865,727 und GB-A-908,205 beschrieben sind. Ein besonders geeignetes Harz ist das Reaktionsprodukt aus aliphatischem 2,6-Polyamid, Diethylentriamin und Epichlorhydrin.

Als Polyamine kommen einfache Alkylendiamine in Betracht oder Polyalkylenpolyamine wie beispielsweise Diethylentriamin, Triethylentetramin, Tetraethylenpentamin und die entsprechenden Polypropylenpolyamine, und Polybutylenpolyamine wie Dibutylentriamin. Die Polyamine werden zur Herstellung der entsprechenden Chlorhydrinharze mit mehr als einem Mol Epichlorhydrin je Mol Polyamin umgesetzt. Im allgemeinen werden von 1,5 bis 4,0 Mol Epichlorhydrin, meist 2 bis 3 Mol angewendet. Die Umsetzung erfolgt in waßriger Lösung, bei mäßig erhöhter Temperatur (etwa 50°C), bis der gewünschte Viskositätsgrad erreicht ist. Vorzugsweise verwendet man Umsetzungsprodukte von Epichlorhydrin mit Dipropylentriamin oder mit Bis(3-Aminopropyl)methylamin, wobei man 2,8 bis 3,8 Mol Epichlorhydrin mit I Mol Polyamin umsetzt.

Die Polyamid-Polyamine sind Kondensationsprodukte einer gesättigten, aliphatischen, zweibasischen Säure, die 3 bis 8 Kohlenstoffatome im Molekül aufweist mit einem der oben genannten Polyamine, das mindestens eine sekundäre und zwei primäre Amingruppen aufweist, wie beispielsweise die oben genannten Polyalkylenpolyamine. Es können auch Gemische dieser zweibasischen Säuren verwendet werden.

Die Gesamtbreite des Auftrags der Klebstofflösung hängt ab von den gewünschten Festigkeitswerten und dem Schlauchhüllenumfang sowie von der Naßschichtdicke der aufgebrachten Klebstofflösung. Gewöhnlich wird die Gesamtbreite des Klebstoffauftrags zwischen etwa 1 bis 15, insbesondere 2 bis 3 mm liegen und beträgt nur wenige Prozent des späteren Schlauchhüllenumfangs. Bei Verwendung eines Folienstreifens zur überlappenden Verbindung einer aus den Randzonen gebildeten Stoßnaht ist ein entsprechend doppelt so breiter Auftrag der Klebstofflösung erforderlich.

Es ist selbstverständlich, daß der Auftrag der Klebstoff-lösung nicht über die gesamte Fläche der Bahn erfolgen kann, sondern nur im gewünschten Verklebungsbereich, d.h. entlang der beiden längsaxial sich erstreckenden Ränder und/oder auf der Oberfläche des Folienstreifens.

Die mit der Klebstofflösung zu versehende Oberfläche der Cellulosebahn befindet sich beim Auftrag der Klebstoff-lösung im getrockneten oder im wieder angefeuchteten Zustand.

Nach dem Auftrag der Klebstofflösung, z. B. mit Walzen oder Sprühdüsen, wird die Verbindungsnaht durch Überlappen der Randzonen der Cellulosebahn bzw. durch Überlappen des Folienstreifens mit den Randzonen der Cellulosebahn hergestellt. Das Lösungs- bzw. Dispersionsmittel kann durch vorsichtiges Erwärmen mit Heißluft oder Infrarotstrahlern entfernt werden; das Erwärmen wird jedoch zweckmäßigerweise nicht angewendet, da es zu einer Versprodung des Cellulosematerials führen kann. Vorzugsweise erfolgt die Entfernung des Lösungs- bzw. Dispersionsmittels und auch die Härtung des Harzes während der anschließenden Lagerung bei Raumtemperatur über einen Zeitraum von etwa 1 bis 3 Tagen. Durch die während der Lagerung erfolgende Härtung des den Klebstoff bildenden Harzes verbinden sich die überlappenden Randzonen der Cellulosebahn miteinander bzw. der Folienstreifen mit den Randzonen. Eine Schichtdicke für den Klebstoff entsprechend einem Flächengewicht im Bereich von 0,2 bis 10 g/m² ist im allgemeinen ausreichend. Die übliche Dicke der Klebstoffschicht entspricht einem Flächengewicht von etwa 0,3 bis 3 g/m² bei einer Gesamtbreite der Klebstoffschicht von etwa I bis 15 mm. Nach der Lagerung hat die Schlauchhülle einen Feuchtigkeitsgehalt von 4 bis 15, insbesondere 7 bis 10 Gew.-%.

Es ist an sich überraschend, daß während des Überlappens der Randzonen miteinander oder mit dem Folienstreifen kein Druck oder Hitze auf die Nahtstelle ausgeübt werden muß. Die Kombination aus Klebstoff und Bahnmaterial ermöglicht eine äußerst schnelle Haftung im Klebebereich, so daß der gebildete Schlauch bereits nach I bis 3 sec nach der Überlappung aufgewickelt werden kann.

Die Klebstoffschicht kann noch weitere Zusätze enthalten, z.B. Mittel, um diese Schicht oder die Schlauchhülle vor dem Befall durch Mikroorganismen zu schützen, Netzmittel, Weichmacher wie Glycerin, Füllstoffe wie Kaolin, Glaskugeln, Kreide, Quarzmehl, Mikrodolomit, Schwerspat, feinkörnigen Sand, Zinkoxid und Pigmente sowie organische und anorganische Farbstoffe z.B. in Pulver- oder Schuppenform.

Ferner zeigt die Schlauchhülle den Vorteil, daß der Klebstoff beim Verkleben von Bahnen unter Ausbildung von Schlauchhüllen eine ausreichend feste Naht bildet. Besonders bei der Herstellung von Würsten, bei der die Naht beim Brühen der Wurst längere Zeit heißem Wasser ausgesetzt ist, sowie beim Raffen, Füllen, Abdrehen, Abbinden, Klippen und dergleichen, wenn die Naht hoher mechanischer Belastung und Spannungen standhalten muß und Dimensionsänderungen eintreten, hat sich gezeigt, daß diese Kombination aus Cellulosebahn und Klebstoff besonders vorteilhaft ist.

Wie sich zeigte, liegt die Reißfestigkeit von Klebestellen bei gleichen Werten oder sogar über den Werten für die Reißfestigkeit des Cellulosematerials in Querrichtung.

Das Mittel zur Verbesserung der Schälbarkeit der Wursthülle ist eine Emulsion mit öligem Charakter, die im wesentlichen aus zwei Hauptkomponenten besteht: einem wasserlöslichen Celluloseether als erster Komponente und einem Öl als zweiter Komponente. Unter einer Emulsion mit öligem Charakter ist eine Emulsion zu verstehen, deren äußere Matrix aus dieser zweiten Komponente besteht, in der die in Wasser gelöste erste Komponente emulgiert ist. Das Öl ist ein Triglyceridgemisch von gesättigten Fettsäuren mit einer Kohlenstoffkettenlänge im Bereich von 4 bis 14 Kohlenstoffatomen, z.B. natürliches Öl, ein Mineralöl, z.B. Paraffinöl, oder ein Siliconöl. Daneben enthält die ölige Emulsion einen geeigneten Emulgator. Die zweite, ölige Komponente ist in mehr als der 15-fachen Menge der ersten Komponente, vorzugsweise bis zur 100-fachen Menge vorhanden. Besonders vorteilhaft beträgt die Menge an zweiter Komponente die 30- bis 80-fache Menge der ersten Komponente. Der Überzug ist zweckmäßigerweise in einer Gesamtmenge von 1 bis 5, insbesondere 1,5 bis 2 g je m² der Schlauchoberfläche, vorhanden, wobei er 15 bis 20 mg/m² der ersten Komponente enthält.

Unter Celluloseether sind zu verstehen: Carboxymethylcellulose, Alkylcellulose wie Methyl- oder Ethylcellulose, Hydroxyalkylcellulose wie Hydroxyethyl- oder Hydroxypropylcellulose, Alkyl-hydroxyalkylcellulose wie Methyl- bzw. Ethyl-hydroxyethylcellulose oder Methylbzw. Ethyl-hydroxypropylcellulose, Alkyl-carboxymethylcellulose, Hydroxyalkyl-carboxymethylcellulose und Alkyl-hydroxyalkyl-carboxymethylcellulose.

Im Rahmen dieser Beschreibung gelten bei der Nennung dieser Bezeichnungen auch die Alkalimetallsalze wie Natriummetallsalze als einbezogen. Ferner sollen unter die Definition "wasserlöslich" auch die alkalilöslichen Celluloseether fallen.

Natürliche Öle sind z.B. pflanzliche Öle wie Leinöl, Olivenöl, Sonnenblumenöl, Sojaöl, Rizinusöl, Rüböl oder Kokosöl. Als geeignetes Siliconöl kommt insbesondere ein lebensmittelrechtlich zugelassenes Dimethylpolysiloxan in Betracht. Das bevorzugte Triglyceridgemisch enthält gesättigte Fettsäuren mit einer Kettenlänge von 4 bis 14, vorzugsweise 6 bis 10 Kohlenstoffatomen. Diese Triglyceridgemische sind beispielsweise unter der Bezeichnung ®Myglyol oder ®Softenol (Herst. Dynamit Nobel) im Handel. Der Ölanteil des Überzugs kann auch aus einer Abmischung genannter Öle bestehen.

Der Überzug enthält - bedingt durch das Herstellungsverfahren - chemischen Emulgator in solchen Mengen, daß die angestrebten Eigenschaften des Überzugs bzw. der Schlauchhülle mit Überzug auf der Innenseite nicht beeinflußt werden. Derartige Emulgatoren sind beispielsweise Ethoxylate oder Propoxylate natürlicher gesättigter und/oder ungesättigter Fettsäuren, wie sie beispielsweise durch Verseifung der natürlichen Öle, Sojaöl, Leinöl, Rizinusöl u.ä. erhalten werden, sowie Mono- oder Diester natürlicher gesättigter und/oder ungesättigter Fettsäuren mit mehrwertigen Alkoholen, wie beispielsweise Glycerin, Pentaerithryt, Sorbit, Mannit, u.ä.; aber auch toxikologisch unbedenkliche, lebensmittelrechtlich zugelassene synthetische Emulgatoren, wie Alkyl-, Alkyl-aryl-sulfate oder -sulfonate. Ethoxylierte Sojafettsäuren sind beispielsweise unter der Bezeichnung ®Deglycal, ethoxylierte Rizinusölsäuren unter der Bezeichnung ®Cremophor im Handel. Die Emulgatoren werden in einer Menge von 0,5 bis 2n Gew.-%, insbesondere bis 2 Gew.-%, bezogen auf die Öl-Komponente, zugesetzt. Eine relativ niedrige Menge an Emulgator ist hierfür ausreichend.

Als bevorzugte Emulgatoren haben sich insbesondere Sorbitanfettsäureester sowie ethoxylierte Soja-Fettsäuren (52,5 % Linolsäure, 33,5 % ölsäure, 14 % Palmitinsäure, Linolensäure und Arachinsäure + 12 Mol Ethylenoxid), ethoxylierte Rizinusölsäure (86 % Rizinusölsäure, 9 % Ölsäure, 2 bis 3 % Linolsäure, 2% Stearinsäure + 36 Mol Ethylenoxid) sowie ethoxylerte ölsäuren erwiesen.

Besonders geeignete ölige Emulsionen enthalten außerdem etwa I bis 15 % eines Polyols mit 3 bis 6 C-Atomen und wenigstens 2 Hydroxygruppen. Typische geeignete Polyole sind beispielsweise Glycerin, Propylenglycol, Triethylenglycol und Sorbit.

Zur Verpackung von Fleischwaren in Form von Wurstmasse werden bekanntlich geraffte, nahtlose Schlauchhüllen verwendet, die beim Einpressen der Wurstmasse fortlaufend entfältelt werden. Diese gerafften Hüllen, in der Fachsprache auch als Raupen oder Hohlstäbe bezeichnet, werden bisher aus langen, nahtlosen Schläuchen hergestellt, die man in Richtung ihrer Längsachse fördert und gegen eine Gegenkraft rafft, wobei die Länge der gerafften Hülle gewöhnlich nur noch 1 bis 3 % der Ursprungslänge beträgt.

Auch die erfindungsgemäße Schlauchhülle kann gerafft werden.

Dies ist besonders überraschend, da wegen der Verdickung im Bereich der Klebenaht, insbesondere wenn ein beide Ränder überdeckender Folienstreifen verwendet wird, eigentlich Schwierigkeiten beim Raffen du erwarten sind. Die Schlauchhülle wird beispielsweise mit dem aus der US-A-3,988,804 und US-A-4,185,358 bekannten Verfahren bzw. der dort beschriebenen Vorrichtung gerafft.

In bevorzugter Ausführungsform zeigt die geraffte Schlauchhülle eine spiralförmige Verdrehung und folglich eine Verdrillung der relativ dicken Nahtzone um die Längsachse der Hülle. Dies geschieht beispielsweise mit an sich bekannten Raffvorrichtungen, z.B. mit den in US-A-2,819,488, US-A-3,619,854, US-A-3,594,857 und US-A-3,766,603 beschriebenen.

Die gerafften Schläuche werden mit einem Wurstbrät vom Brühwursttyp gefüllt (ca. 20 m/min), mechanisch abgedreht, gebunden oder geklippt, geräuchert, bei 70 bis 85°C gebrüht und mit Wasser abgekühlt. Man erhält Würste mit gleichmäßiger Form und schälbarer, an der Wurstmasse eng anliegender Hülle. Würste vom Brühwursttyp sind beispielsweise jagdwurst, Bierschinken, Fleischwurst, Gelbwurst, Mortadella und Lyoner.

Sofern die Schlauchhülle für empfindliche Nahrungsmittel vorgesehen ist oder mit einem hohen Wassergehalt gelagert werden soll, so wird die Bahn oder die Schlauchhülle sterilisiert, wobei man z.B. Hitze- oder Ozonbehandlung, Hochfrequenzbestrahlung, oder Behandlung mit chemischen Mitteln wie Propylenglykol (GB-A-1,584,435) oder Sorbat-lösung (US-A-3,617,312) anwendet.

Neben bereits genannten Vorteilen ist noch darauf hinzuweisen, daß die Schlauchhüllen der Erfindung sich mit höherer Geschwindigkeit als bisher produzieren lassen: Bei der Herstellung von Bahnen anstelle von nahtlosen Schläuchen aus regenerierter Cellulose nach dem Viskoseverfahren kann der Spinnprozeß rascher durchgeführt werden, ebenso das Beschichten der Bahnen und das Bedrucken. Die Hülle zeigt ferner eine gleichmäßige einheitliche koagulierte und regenerierte Schicht aus Cellulose.

Neben Flexodruck ist auch hochwertiger Tiefdruck möglich. Ferner läßt sich der Zuschnitt bzw. die Bahn mit einem Rundumdruck oder als Vorder- und Rückseitendruck bedrukken.

Bei der Verwendung als Wursthülle tritt keine Geschmacksbeeinflussung der Wurstmasse ein. Die Wursthülle und Klebenaht zeigen große Festigkeit gegenüber Dehnungsbelastung und Volumenbeständigkeit beim Füllen mit Wurstmasse, Hantieren und Verarbeiten. Durch den beim Füllen auftretenden Druck und durch die beim Brühen und Abkühlen auftretenden Quell- und Schrumpfkräfte tritt überraschenderweise keine Schädigung der Naht ein. Die Wursthülle ist auch bei tiefen Temperaturen lagerfähig und läßt sich gut aufschneiden, wobei der Folienstreifen als Aufreißband dienen kann. Der besondere Vorteil liegt darin, daß die Schlauchhülle auch im Bereich der Klebstoffschicht rauchdurchlässig ist. Die beispielsweise mit Brühwurstbrät gefüllten Schlauchhüllen zeigen nach dem Räuchern eine gleichmäßige, typisch rötlich-braune Räucherfarbe.

Ein weiterer wesentlicher Vorteil besteht darin, daß die vorgeschlagene Innenbeschichtung einerseits die Klebstoffschicht nicht negativ beeinflußt, andererseits aber eine wesentliche Verbesserung der Schälbarkeit der Schlauchhülle erzielen läßt. Der überwiegend ölige Charakter der Innenbeschichtung vermeidet zudem, im Gegensatz zu den weitgehend wäßrigen Dispersionen nach dem Stand der Technik, das unkontrollierte Aufweichen und Durchfeuchten des Schlauchmaterials. Überraschenderweise hat sich außerdem gezeigt, daß die ölige Emulsion mit gegenüber bekannten Emulsionen zur Verbesserung der Schälbarkeit (US-A-3,898,348) stark verringertem Anteil an Cellulose derivaten im Vergleich zur Ölkomponente eine ausgezeichnete Schälbarkeit der Hülle ermöglicht. Das Verfahren zum Aufbringen der Innenbeschichtung ist wesentlich einfacher als die bisher üblichen, bei denen das Mittel zur Verbesserung der Schälbarkeit in eine Schlaufe des Schlauchs eingebracht werden muß oder während des Raffens durch den Raffdorn auf die Innenseite des Schlauchs aufgesprüht wird.

Die Erfindung wird anhand der folgenden Beispiele näher erläutert.

**Beispiel 1**

Viskose wird durch einen Spalt in ein saures Koagulationsbad gepreßt, wo die übliche Koagulation und Regenerierung unter Bildung von Cellulosehydrat-Gel erfolgt. Nach dem Durchlaufen von Wasch- und Entschwefelungsbädern wird die Bahn aus Cellulosehydrat-Gel durch ein Weichmacherbad geführt, das aus einer 9 gew.-%igen wäßrigen Glycerinlösung besteht. Eine gesonderte Querverstreckung der Bahn während der Herstellung wird nicht vorgenommen.

Nach dem Trocknen bei 70 bis maximal 110°C zeigt die erhaltene Bahn aus regenerierter Cellulose ein Flächengewicht von 40 g/m$^2$, einen Wassergehalt von ca. 8 Gew.-% und einen Glyceringehalt von ca. 20 Gew.-%. Der Wassergehalt wird gegebenenfalls durch Wiederbefeuchten eingestellt. Das Bahnmaterial zeigt ferner eine Reißfestigkeit von 75 bis 85 N/mm$^2$ in Querrichtung.

Die Cellulosebahn wird in 60 mm breite Bänder geschnitten. jeder bandförmige Zuschnitt wird entlang eines seiner beiden Ränder mit einer 12 gew.-%igen wäßrigen Lösung (pH 7,5, eingestellt mit konz. Ammoniaklösung) eines wasserlöslichen kationischen Harzes streifenförmig in Band-längsrichtung beschichtet. Das Harz ist ein Reaktionsprodukt aus Ethylendiamin, Adipinsäure, Diethylentriamin und Epichlorhydrin und ist als 12 und 20 gew.-%ige wäßrige Lösung unter dem Namen ®Resamin HW 601 (Hersteller Cassella) im Handel.

Hierzu wird die Lösung mittels einer rotierenden, ca. 2 mm breiten Antragswalze aus einer Vorratswanne auf das laufende Folienband übertragen und nimmt dort bei einer Naßschichtdicke von 10 bis 12 /um eine Breite von 2 bis 3 mm ein. Das in Randnähe beschichtete Band wird mit Hilfe äußerlich und innerlich angreifender Formhilfen derart zu einem Schlauch mit einem Durchmesser von 17 mm geformt, daß die mit der Lösung beschichtete Kante und die unbeschichtete Kante sich um ca. 5 mm überlappen. Die jeweiligen kantennahen Bereiche bilden eine in Längsrichtung verlaufende, überlappte Klebenaht, wobei eine Klebstoffschicht entsprechend einem Flächengewicht von l bis 2 g/m$^2$ resultiert. In diesen Schlauch wird mit einem Rohr, das sich durch die Formhilfen hindurch bis kurz vor ein Quetschwalzenpaar zum Flachlegen des gebildeten Schlauches erstreckt, eine ölige Emulsion eingebracht. Die ölige Emulsion besteht aus:

58 g Pflanzenöl (C$_7$-Fettsäure-Triglycerid, ®Softenol 3107, Herst. Dynamit Nobel)
0,8 g Sorbitan-monolaurat (®Span 20, Herst. Atlas Chemie)

0,2 g Polyoxyethylen(20)-sorbitanmonooleat (Sorbitan-monooleat-ethoxylat, ®Tween 80, Herst. Atlas Chemie)

1 g Carboxymethylcellulose in 40 g Wasser (®Tylose C30 NV, Herst. Hoechst)

Der gebildete Schlauch wird ca. 1 bis 2 sec nach Bildung der Überlappungsnaht flachgelegt und aufgerollt. Er besitzt auf seiner inneren Oberfläche 1,5 bis 2 g/m² ölige Emulsion.;

Bereits nach 1-tägiger Lagerung bei Raumtemperatur besitzt die Klebestelle eine Heißwasserbeständigkeit von mehreren Stunden, wenn quer zur Naht geschnittene Prüflinge von 15 mm Breite und 50 mm Einspannlänge in 80°C heißes Wasser hängend eingetaucht und am unteren Ende mit 500 g belastet werden.

Im Normklima (23°C, 50 % rel. Feuchte) konditionierte Schlauchhüllen zeigen eine Reißfestigkeit in Querrichtung von 50 N/mm² und einen Platzdruck von mehr als 1 bar; für 30 min in Wasser (20°C) eingelegte Schläuche weisen einen Platzdruck von 0,35 bis 0,45 bar auf. Diese Werte sind für kleinkalibrige Wursthüllen ausreichend.

Die so hergestellten Schlauchhüllen werden mit der aus der US-A-4,185,358 bekannten Vorrichtung gerafft und als Schlauchhüllen mit typischen Wurstfüllungen, z. B. nach Wiener oder Frankfurter Art, gestopft, portioniert und unter bekannten Bedingungen geräuchert und gebrüht. Man erhält Brühwürstchen, die eine gleichmäßige typische rotbraune Räucherfarbe aufweisen; die Klebenaht hat den bei der Verarbeitung auftretenden Kräften standgehalten. Nach dem Abkühlen und kurzem Wässern werden die Würstchen mit einer automatischen Schälvorrichtung geschält. Das Herausfallen der Würstchen läuft einwandfrei, ohne daß die Eigenhaut der Würstchen haftet oder beschädigt wird.

**Beispiel 2**

Man verfährt wie in Beispiel 1 beschrieben. Die ölige Emulsion besteht aus:

58,5 g Fettsäure-Triglycerid (®Softenol 3107, Herst. Dynamit Nobel)

0,47 g Sorbitan-monolaurat (®Span 20, Herst. Atlas Chemie)

0,03 g Sorbitan-monooleat-ethoxylat (®Tween 80, Herst. Atlas Chemie)

10 g Glycerin

1,5 g Carboxymethylcellulose in 29,5 g Wasser (®Tylose C 30 NV, Herst. Hoechst)

Die Wursthülle zeigt ausgezeichnete Schäleigenschaften.

**Beispiel 3**

Man wiederholt Beispiel I, verwendet aber als Klebstoff für die Klebenaht eine Lösung aus:

94 % kationisches Polyamidharz (12,5 %ig in Wasser, pH 8,5, ®Kymene 5574 H, Herst. Hercules)

5 % Glycerin

1 % Farbpigment (®Novofil BB 02, Herst. Hoechst)

Die Lösung wird aus einem unter Druck stehenden Vorratsgefäß durch einen dünnen Schlauch zu einer Beschichtungsdüse gefördert, deren öffnung einen Durchmesser von ca. 0,4 mm besitzt und die im Bereich des Formkopfes so positioniert ist, daß die Klebstofflösung unmittelbar in den Überlappungsbereich des zum Schlauch gelegten Cellulosebandes entlassen wird. Durch Wahl eines geeigneten Druckes läßt sich eine ca. 1 bis 3 mm breite Spur der Klebstofflösung im Überlappungsbereich kontinuierlich erzeugen, mit der die Kantenbereiche des Bandes überlappend verbunden werden. In den erhaltenen Schlauch wird sofort anschließend die ölige Emulsion des Beispiels 1 eingeführt, der Schlauch flachgelegt und aufgerollt.

Nach 3 Tagen Lagerung bei Raumtemperatur hat sich eine Heißwasserbeständigkeit von mehreren Stunden entwickelt, wenn quer zur Naht geschnittene Prüflinge von 15 mm Breite und 50 mm Einspannlänge in 80°C heißes Wasser hängend eingetaucht und am unteren Ende mit 600 g belastet werden. Die so hergestellten Schlauchhüllen werden wie in Beispiel 1 beschrieben gerafft und zu Würstchen verarbeitet. Die Wursthülle zeigt beim maschinellen Abschälen ausgezeichnete Schäleigenschaften.

**Beispiel 4**

Eine Bahn aus langfaserigem Hanfpapier mit einer Flachbreite von 235 mm und einem Flächengewicht von 21 g/m² wird beidseitig mit Viskose beschichtet. Die Spaltbreite beträgt beispielsweise 0,8 mm, die Bahngeschwindigkeit 5 m/min.

Auf die mit Viskose versehene Bahn wird danach eine zur Fällung und Regenerierung geeignete Flüssigkeit aufgebracht. Die Bahnbreite wird durch an den beiden Bahnkanten angreifende Halteelemente konstant gehalten, so daß die gewöhnlich beim Regenieren auftretende Schrumpfung in Querrichtung verhindert wird. Die faserverstärkte Bahn aus Cellulosehydrat-Gel durchläuft anschließend Waschund Entschwefelungsbäder. Die Bahn aus Cellulosehydrat-Gel hat nun eine Breite von 210 mm.

Die faserverstärkte Bahn aus Cellulosehydrat-Gel wird durch eine Wanne gezogen, die eine 3 gew.-%ige wäßrige Lösung des in Beispiel 1 verwendeten kationischen Harzes enthält. Danach passiert die Bahn ein Bad mit 15 gew.-%iger wäßriger Glycerinlösung.

Es folgt eine Vortrocknung der Bahn, bei der der Wassergehalt der Bahn auf 80 bis 150 Gew.-% erniedrigt wird. Danach werden die Bahnkanten von Halteelementen erfaßt, wobei die Bahn auf eine Breite von 252 bis 262 mm in Querrichtung verdehnt wird. Die Bahn wird - während sie weiterhin auf diese Breite gehalten wird - getrocknet, vorzugsweise bei etwa 80 bis 110°C Die Restfeuchte der aufgewickelten Bahn beträgt etwa 14 Gew.-%, sie zeigt eine Reißfestigkeit in Längsrichtung von 52 N/mm² in Querrichtung 58 N/mm² und eine Reißdehnung von etwa 17;5 % in beiden Richtungen. Ihr Flächengewicht ist etwa 100 g/m², ihr Glyceringehalt etwa 21 %. Auf beiden Oberflächen sind Schichten aus dem gehärteten, wasserun-löslichen Harz mit jeweils einem Flächengewicht von etwa 0,5 bis 1 g/m² vorhanden.

Die Bahn aus faserverstärkter Regeneratcellulose wird in 170 mm breite Bänder geschnitten. Ein solches Band wird durch eine Formvorrichtung geführt, wobei ein Schlauch mit einem Durchmesser von 50 mm entsteht und die beiden Ränder des Bandes sich um 13 mm überlappen. In diese Überlappung ragt die Spitze einer feinen Düse, durch die mittels Druck eine 12 %ige wäßrige Lösung des in Beispiel 1 genannten Harzes, die mit konz. Ammoniak auf einen pH-Wert von 7,5 eingestellt wurde, gespritzt wird. Die nun im Überlappungsbereich vorhandene ca. 7-8 mm breite Schicht der Klebstofflösung mit einer Naßschichtdicke von ca. 10 /um verbindet die randnahen Bereiche des Bandes miteinander. Der kontinuierlich gebildete und mit einer in Längsrichtung verlaufenden Klebenaht versehene Schlauch wird unmittelbar anschließend wie in Beispiel 1 beschrieben mit einer öligen Emulsion auf seiner Innenseite versehen, sofort flachgelegt und aufgerollt, ohne daß die sich überlappenden Randzonen verrutschen.

Nach 2-tägiger Lagerung im Normklima besitzt die Klebenaht eine Heißwasserfestigkeit von mehreren Stunden, wenn quer zur Naht geschnittene Probestreifen von 50 mm Einspannlänge und 15 mm Breite in 80°C heißes Wasser senkrecht eingehängt und mit einem Gewicht von 1000 g belastet werden. Nach 30-minütiger Wässerung im Wasserbad zeigt der Schlauch eine Platzdruck von 1,2 bar.

Quer zur Naht geschnittene, klimatisierte Proben zeigen im Zugversuch eine Reißfestigkeit von 57 bis 58 N/mm² in Querrichtung, erreichen also auch im Bereich der Naht die ursprüngliche Materialfestigkeit.

Die erhaltenen Schläuche werden mit der aus der US-A-4,185,358 bekannten Raffvorrichtung gerafft, bzw. zu einseitig abgebundenen Hüllenabschnitten aufgearbeitet.

Die Hüllenabschnitte werden mit einer üblichen Wurstabfüllvorrichtung mit einem Wurstbrät für Brühwürste (z. B. Lyoner, Jagdwurst oder Mortadella) bei einem Fülldruck von 0,3 bar gefüllt und durch Abbinden oder Klippen am noch offenen Ende verschlossen. Danach werden die erhaltenen Würste wie üblich geräuchert, z.B. 10 bis 60 Minuten im Feuchtrauch bei 70 bis 80°C, und für weitere 10 Minuten in Wasser von 80 bis 82°C gebrüht, danach gekühlt und im Kühlraum gelagert. Im Falle von Salamifüllungen werden die Würste geräuchert und getrocknet.

Nach dem Anschneiden können die Wursthüllen mühelos von der Wurst abgezogen werden. Ferner zeigen die Würste auch im Nahtbereich eine gleichmäßige Räucherfärbung. Die Klebenaht ist stabil gegenüber den mechanischen und thermischen Belastungen während der Verarbeitung und Lagerung.

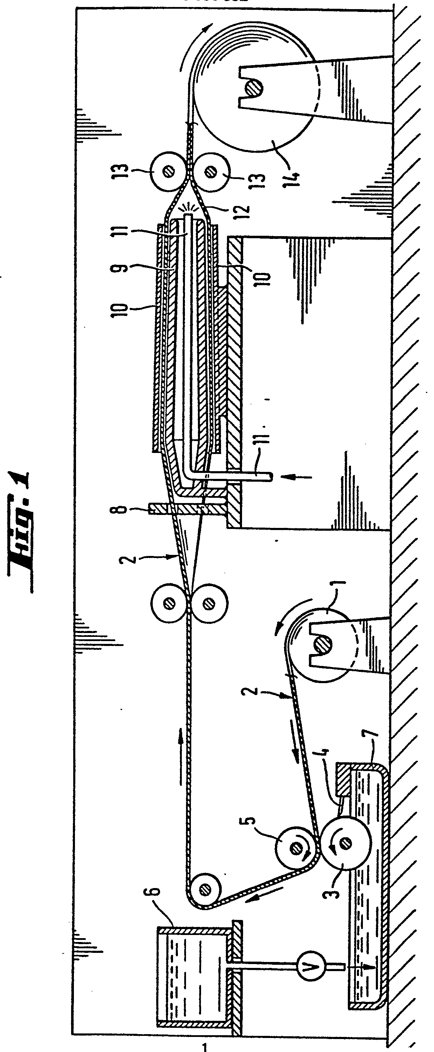

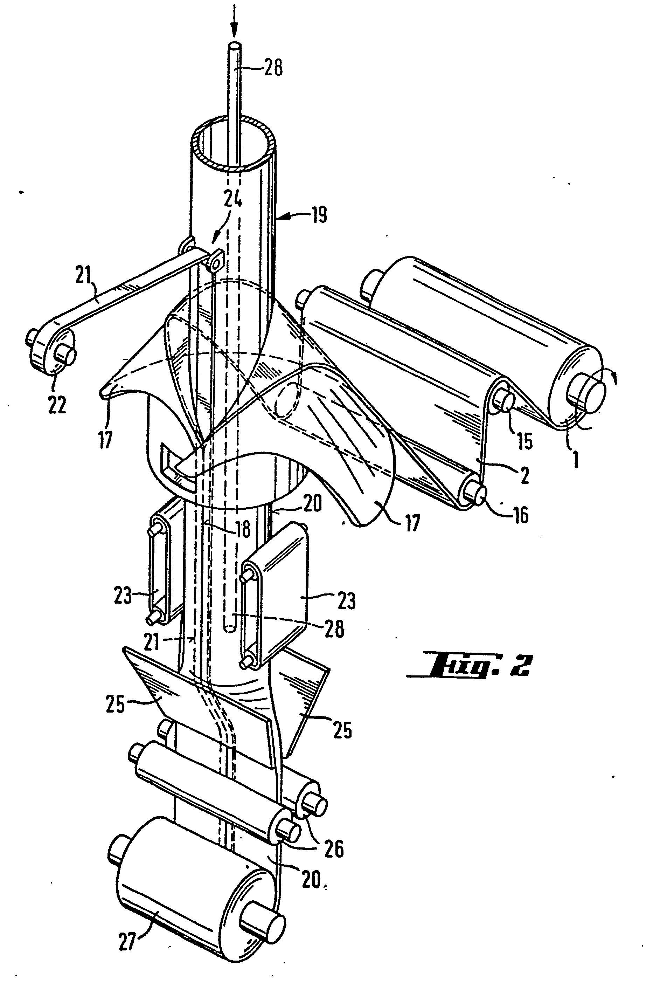

Die Erfindung wird durch die Fig. 1 und 2 näher erläutert.

Fig. 1 zeigt eine Verfahrensvariante der Herstellung der Wursthülle in Seitenansicht,

Fig. 2 zeigt eine weitere Verfahrensvariante in perspektivischer Seitenansicht.

In Fig: 1 wird von der Vorratsrolle 1 eine Bahn 2 aus Cellulose in ein Auftragswerk geführt, das aus einer Auftragswalze 3, einem Rakel 4 und einer Gegenwalze 5 besteht. Die Auftragswalze 3 erzeugt einen streifenförmigen Auftrag der Klebstofflösung an einer Randzone der Bahn 2. Die Klebstofflösung wird vom Vorratsbehälter 6 in die Wanne 7 gefördert. Die Bahn 2 wird mit der Formschablone 8, Stützrohr 9 und Anlegehülse 10 zu einem Schlauch mit überlappter Längsnaht geformt. Durch ein Rohr 11 wird die ölige Emulsion in den Schlauch 12 eingeführt. Der Schlauch 12 wird anschließend durch das Abzugsrollenpaar 13 flachgelegt und zu der Aufwickelvorrichtung 14 transportiert.

In Fig. 2 wird die Rahn 2 aus Cellulose von der Vorratsrolle I abgezogen und über Leitrollen 15 und 16 zu einer Formschulter 17 geführt, wo die Schlauchformung stattfindet. Die beiden Ränder der Bahn 2 werden unter Bildung einer Stoßnaht 18 einander genähert. Das hohlzylindrische Stützelement 19 befindet sich im Innern des Schlauches 20. Der Folienstreifen 21 aus dem Bahnmaterial wird von der Rolle 22 abgewickelt und über ein ösenförmiges Führungselement 24 in das Innere des Schlauches 20 geführt, wobei sich die Stoßnaht 18 etwa in der Mitte des Folienstreifens 21 befindet. Der Folienstreifen 21 ist mit einer wäßrigen Klebstofflösung beschichtet.

An der äußeren Oberfläche des Schlauches 20 schieben Transportbänder 23 den Schlauch 20 in vertikaler Richtung nach unten. Der Schlauch 20 passiert Leitbleche 25, die den Schlauch flachlegen, sowie ein Transportwalzenpaar 26 und wird dann auf der Rolle 27 aufgewickelt. Durch das Rohr 28 im Innern des hohlzylindrischen Stützelements 19 wird ölige Emulsion auf die Innenseite des Schlauches 20 aufgebracht. Das Rohr 28 endet kurz vor dem Flachlegen des Schlauches 20 im Bereich der Leitbleche 25.

## Patentansprüche

1. Aus blatt- oder bahnförmigem, rechteckigem Folienzuschnitt oder endloser Folienbahn, der bzw. die um die Längsachse gebogen ist und dessen bzw. deren längsaxial sich erstreckenden Randbereiche mit einer Klebenaht verbunden sind, bestehende Wursthülle, wobei die Wursthülle aus Cellulose oder faserversterkter Cellulose besteht und im Bereich der Klebenaht eine Schicht aufweist, die ein im wesentlichen wasserunlösliches kationisches Harz zur Verbindung der längsaxial sich erstreckenden Ränder enthält, dadurch gekennzeichnet, daß die Wursthülle im Bereich der Klebenaht eine rauchdurchlässige Klebstoffschicht, umfassend ein wasserunlösliches Kondensationsprodukt von Polyamidpolyamin, aliphatischem Polyamin oder Polyamid mit bifunktionellen Halohydrinen oder deren Derivaten wie Epichlorhydrin, aufweist und auf ihrer inneren Oberfläche einen Überzug aus einer Emulsion mit öligem Charakter zur Verbesserung der Schälbarkeit zeigt, die einen wasserlöslichen Celluloseether als erste Komponente und ein Öl auf der Basis von Triglyceridgemischen von gesattigten Fettsäuren mit einer Kohlenstoffkettenlänge im Bereich von 4 bis 14 Kohlenstoffatomen, von Mineralöl, und/oder von von Siliconöl als zweite Komponente sowie Emulgator umfaßt, wobei die zweite Komponente in mehr als der 15-fachen und bis 100-fachen, vorzugsweise 30- bis 80-fachen Menge der ersten Komponente vorhanden ist.

2. Wursthülle nach Anspruch 1 dadurch gekennzeichnet, daß den längsaxial sich erstreckenden Rändern nahe Bereiche des Zuschnitts bzw. der Bahn überlappend miteinander verklebt sind, wobei die Klebstoff enthaltende Schicht sich zwischen den sich überlappenden Bereichen befindet.

3. Wursthülle nach Anspruch 1, dadurch gekennzeichnet, daß die längsaxial sich erstreckenden Ränder aneinander stoßen und mit längsaxial sich erstreckenden, beide Rändern nahe Bereiche überdeckenden rauchdurchlässigen Folienstreifen auf der Außenseite und/oder Innenseite der Schlauchhülle verbunden sind, wobei die Klebstoff enthaltende Schicht sich zwischen dem (den) Folienstreifen und den randnahen Bereichen befindet.

4. Wursthülle nach Anspruch 2, dadurch gekennzeichnet, daß sich zwischen den überlappenden Bereichen ein längsaxial sich erstreckender rauchdurchlässiger Folienstreifen befindet, wobei sich Klebstoff enthaltende Schichten zwischen Folienstreifen und den überlappenden Bereichen des Zuschnitts bzw. der Bahn befinden.

5. Wursthülle nach einem der Ansprüche 1 bis 4, dadurch gekennzeichnet, daß sie gerafft ist, wobei der Verklebungsbereich vorzugsweise spiralförmig um die Längsachse der gerafften Schlauchhülle angeordnet ist.

6. Wursthülle nach einem der Ansprüche 1 bis 5, dadurch gekennzeichnet, daß die auf ihrer Innenseite vorhandene ölige Emulsion zur Verbesserung der Schälbarkeit als erste Komponente Carboxymethylcellulose und als zweite Komponente ein Pflanzenöl umfaßt.

7. Wursthülle nach einem der Ansprüche 1 bis 6, dadurch gekennzeichnet, daß die auf ihrer Innenseite vorhandene ölige Emulsion ein Flächengewicht von 1 bis 5, insbesondere 1,5 bis 2 g/m² besitzt, wobei der Gewichtsanteil der beiden Hauptkomponenten in der Emulsion etwa 50 bis 70g beträgt.

8. Verfahren zur Herstellung der Wursthülle nach einem der Ansprüche 1 bis 7, wobei man einen aus Cellulose oder faserverstärkter Cellulose hergestellten blatt- oder bahnförmigen Zuschnitt oder endlose Bahn um die Längsachse biegt und zu einem Schlauch formt und die beiden längsaxial sich erstreckenden Randbereiche überlappend - oder auf Stoß angeordnet mit einem beide Randbereiche überlappenden rauchdurchlässigen Folienstreifen - verklebt, dadurch gekennzeichnet, daß man während oder nach der Schlauchformung auf die zu verklebenden Flächen des Zuschnitts bzw. der Bahn und/oder des Folienstreifens eine das noch wasserlösliche Kondensationsprodukt von Polyamidpolyamin, aliphatischem Polyamin oder Polyamid mit bifunktionellen Halohydrinen enthaltende Lösung, vorzugsweise alkalische Lösung, aufbringt, danach anschließend die Schlauchinnenseite mit der öligen Emulsion mit der im Anspruch 1 genannten Zusammensetzung beschichtet und das Kondensationsprodukt durch Lagerung des gebildeten Schlauches bei einer Temperatur bis zu 40° C härtet und in wasserunlösliche Form überführt.

9. Verwendung der Wursthülle nach einem der Ansprüche 1 bis 7 als künstliche Wursthaut für zu räuchernde wurstwaren, vorzugsweise für zu räuchernde Würste vom Brühwursttyp.

10. Verwendung der Wursthülle nach einem der Ansprüche 1 bis 7 zur Herstellung von Würstchen mit Eigenhaut.

## Claims

1. A sausage casing, comprising a sheet-like or web-like, rectangular cut piece of film or a continuous web of film, which is curved around its longitudinal axis and the edge regions of which, running parallel to the londitudinal axis, are joined by a glued seam, said sausage casing being composed of cellulose or fiber-reinforced cellulose and having a layer containing a substantially water-insoluble cationic resin in the region of the glued seam for joining the longitudinally running edges, characterised in that the sausage casing has a smoke-permeable adhesive layer in the region of the glued seam which comprises a water-insoluble condensation product of a polyamide-polyamine, an aliphatic polyamine or polyamide with bifunctional halohydrins or derivatives thereof, such as epichlorohydrin, and a coating comprising an emulsion having an oily character on its internal surface for improving the peelability, said emulsion containing, as the first component, a water-soluble cellulose ether and, as the second component, an oil based on triglyceride mixtures of saturated fatty acids with a carbon chain length in the range from 4 to 14 carbon atoms, mineral oil and/or silicone oil, as well as an emulsifier, the second component being present in an amount of more than 15 to 100 times, preferably 30 to 80 times, the amount of the first component.

2. A sausage casing as claimed in claim 1, wherein regions close to the edges running parallel to the longitudinal axis of the cut piece or of the web are glued together with an overlap, the adhesive-containing layer being located between the overlapping regions.

3. A sausage casing as claimed in claim 1, wherein the edges running parallel to the longitudinal axis abut and are joined by smoke-permeable film strips, which run parallel to the londitudinal axis and cover both regions close to eddes, on the outside and/or on the inside of the tubular casind, the adhesive-containing layer being located between the film strip or strips and the redion close to the edges.

4. A sausage casing as claimed in claim 2, wherein a smoke-permeable film strip, running parallel to the longitudinal axis, is located between the overlapping regions, adhesive-containing layers being located between the film strip and the overlapping regions of the cut piece or of the web.

5. A sausage casing as claimed in any of claims i to 4, which is shirred, the glued region preferably being arranded helically around the longitudinal axis of the shirred tubular casing.

6. A sausage casing as claimed in any of claims 1 to 5, wherein the oily emulsion for improving the peelability, which is present on its internal surface, contains, as the first component, carboxymethylcellulose, and, as the second component, a vegetable oil.

7. A sausage casing as claimed in any of claims 1 to 6, wherein the oily emulsion present on its internal surface has a weight per unit area of 1 to 5 g/m2, in particular of 1.5 to 2 g/m$^2$, the weight of the two main components contained in the emulsion amounting to about 50 to 70 percent.

8. A process for the manufacture of the sausage casing as claimed in any of claims 1 to 7, which comprises shaping a sheet-like or web-like cut piece or a continuous web made of cellulose or fiber-reinforced cellulose into a tube by curving it around its longitudinal axis and glueing the two edge regions running parallel to the longitudinal axis to one another with an overlap or, in an abutting arrangement, using a smoke-permeable film strip overlapping both edge regions, characterized in that, during or after forming the tube, a preferably alkaline solution, which contains the still water-soluble condensation product of a polyamide-polyamine, aliphatic polyamine or polyamide with bifunctional halohydrins, is applied to those areas of the cut piece or of the web and/or of the film strip which are to be glued, then the inside surface of the tubular casing is coated with the oily emulsion having the composition indicated in claim 1, and the condensation product is cured and converted into the water-insoluble form by storing the resulting tube at a temperature of up to 40°C.

9. The use of the sausaqe casing as claimed in any of claims 1 to 7 as an artificial sausage skin for sausages to be smoked in particular for cooked sausages to be smoked.

10. The use of the tubular casing as claimed in any of claims 1 to 7 for the production of small sausages with a surface skin.

## Revendications

1. Enveloppe pour saucisse constituée d'un morceau rectangulaire en forme de feuille ou de bande ou d'une bande de feuille sans fin qui est cintré(e) autour de son axe longitudinal et dont les zones de bord s'étendant parallèlement à l'axe longitudinal sont liées par un joint collé, l'enveloppe pour saucisse étant constituée de cellulose ou de cellulose renforcée par des fibres et présentant dans la région du joint collé une couche qui contient une résine cationique pratiquement insoluble dans l'eau pour lier les bords qui s'étendent dans le sens longitudinal, caractérisée en ce que l'enveloppe pour saucisse présente, dans la région du joint collé, une couche d'adhésif perméable à la fumée, comprenant un produit de condensation insoluble dans l'eau d'une polyamidepolyamine, d'une polyamine aliphatique ou d'un polyamide avec des halogénhydrines bifonctionnelles ou leurs dérivés tels que l'épichlorhydrine, et qu'elle présente sur sa face interne un revêtement d'une émulsion à caractère huileux destinée à améliorer l'aptitude au pelage, qui comprend un éther de cellulose soluble dans l'eau comme premier constituant et une huile à base de mélange de triglycéride d'acide gras saturé ayant une longueur de chaîne carbonée comprise entre 4 et 14 atomes de carbone, d'huile minérale et/ou d'huile de silicone conme deuxième constituant ainsi qu'un émulsifiant, le deuxième constituant étant présent en quantité 15 à 100 fois plus grande, de préférence 30 à 80 fois plus grande que le premier constituant.

2. Enveloppe pour saucisse selon la revendication 1, caractérisée en ce que les régions proches des bords qui s'étendent parallèlement à l'axe longitudinal du morceau découpé ou de la bande sont collées l'une à l'autre en se recouvrant, la couche contenant l'adhésif se trouvant entre les régions qui se recouvrent.

3. Enveloppe pour saucisse selon la revendication l'caractérisée en ce que les bords s'étendant parallelement à l'axe longitudinal butent l'un contre l'autre et sont liés, sur la face externe et/ou sur la face interne de l'enveloppe tubulaire avec des rubans perméables à la fumée qui s'étendent parallèlement à l'axe longitudinal et qui recouvrent les deux régions proches des bords, la couche contenant l'adhésif se trouvant entre le ou les rubans et les régions proches des bords.

4. Enveloppe pour saucisse selon la revendication 2, caractérisée en ce qu'entre les régions qui se recouvrent, se trouve un ruban perméable à la fumée s'étendant parallèlement à l'axe longitudinal, les couches contenant l'adhésif se trouvant entre le ruban et les zones se recouvrant du morceau découpé ou de la bande.

5. Enveloppe pour saucisse selon l'une quelconque des revendications 1 à 4 caractérisée en ce qu'elle est repliée, la région de collage étant disposée de préférence en forme de spirale autour de l'axe longitudinal de l'enveloppe tubulaire repliée.

6. Enveloppe pour saucisse selon l'une quelconque des revendications 1 à 5, caractérisée en ce que l'émulsion huileuse présente sur sa face interne pour améliorer l'aptitude au pelage contient comme premier constituant de la carboxyméthylcellulose et comme deuxième constituant une huile végétale.

7. Enveloppe pour saucisse selon l'une quelconque des revendications 1 à 6, caractérisée en ce que l'émulsion huileuse présente sur sa face interne a un poids surfacique de 1 à 5, en particulier de 1,5 à 2 $g/m^2$, la teneur en poids des deux constituants principaux de l'émulsion étant d'environ 50 à 70 %.

8. Procédé de fabrication de l'enveloppe pour saucisse selon l'une quelconque des revendications 1 à 7, dans lequel on cintre autour de l'axe longitudinal un morceau découpé en forme de feuille ou de bande en cellulose ou en cellulose renforcée par des fibres ou une bande sans fin et on le (la) transforme en un tube et on colle les deux régions des bords s'étendant parallèlement à l'axe longitudinal qui se recouvrent ou on les joint bord à bord avec un ruban perméable à la fumée qui recouvre ces deux régions, caractérisé en ce que pendant ou après le formage du tube, on applique sur les faces à coller du morceau découpé ou de la bande et/ou du ruban une solution, de préférence alcaline, contenant le produit de condensation encore soluble dans l'eau d'une polyamidepolyamine, d'une polyamine aliphatique ou d'un polyamide avec des halogénhydrines bifonctionnelles, en ce qu'ensuite on enduit la face interne du tube de l'émulsion huileuse ayant la composition indiquée dans la revendication 1 et en ce qu'on durcit le produit de condensation et qu'on l'amène à une forme insoluble dans l'eau par stockage du tube formé à une température allant jusqu'à 40°C.

9. Emploi de l'enveloppe pour saucisse selon l'une quelconque des revendications 1 à 7 comme peau de saucisse artificielle pour des saucisses à fumer, de préférence pour des saucisses à fumer du type saucisses cuites.

10. Emploi de l'enveloppe pour saucisse selon l'une quelconque des revendications 1 à 7 pour la fabrication de petites saucisses ayant leur propre peau.

Fig. 1

*Fig. 2*